# EUROPEAN PATENT SPECIFICATION

(11) **EP 2 857 890 B1**
(45) Date of publication and mention of the grant of the patent: **29.04.2020**
(21) Application number: 13728919.5
(22) Date of filing: 13.03.2013
(51) Int. Cl.: G02F 1/13357, G02B 6/00, F21V 7/00, F21V 8/00, G02F 1/1335

(54) **SURFACE LIGHT SOURCE DEVICE AND EDGE BACKLIGHT MODULE**
OBERFLÄCHEN-LICHTQUELLEN-VORRICHTUNG UND KANTEN-RÜCKBELEUCHTUNGS-MODUL
DISPOSITIF DE SOURCE LUMINEUSE SUPERFICIELLE ET MODULE DE RÉTROÉCLAIRAGE EN COIN

(30) Priority: 31.05.2012 CN 201220255322 U
(43) Date of publication of application: 08.04.2015
(73) Proprietor: BOE Technology Group Co., Ltd., Beijing 100015 (CN); Beijing BOE Display Technology Co., Ltd., Beijing 100176 (CN)
(72) Inventor: LU, Kun, Beijing 100176 (CN); YAN, Kai, Beijing 100176 (CN); BU, Zhanchang, Beijing 100176 (CN); WANG, Hetao, Beijing 100176 (CN); LI, Zhi, Beijing 100176 (CN)
(74) Representative: Brötz, Helmut
(86) International application number: PCT/CN2013/072537
(87) International publication number: WO 2013/177967

(56) References cited:
- EP-A2- 1 139 013
- WO-A1-2011/155537
- CN-A- 101 368 706
- CN-A- 102 003 661
- CN-U- 202 629 814
- US-A1- 2008 252 819
- US-B2- 7 549 760

## Description

### FIELD OF THE ART

The invention relates to backlighting technology of a display, more specifically, to a surface light source device and an edge-lit type backlight module.

### BACKGROUND

A backlight module is an important component of a liquid crystal display (LCD). As LCDs do not produce light themselves, a function of the backlight module is to supply a light source with sufficient brightness and good uniformity, such that the LCD can display images normally. Currently, the backlight module is not only applied in LCD devices such as LCDs, LCD TVs but also used to provide light source for display devices such as digital photoframes, electronic paper, and mobile devices and the like.

Backlight modules may be classified into direct-lit type backlight module and edge-lit type backlight module, base on the location of the light source. In a direct-lit type backlight module, the light source is disposed below the light-exiting surface directly, and the light from the light source travels through a certain distance spatially and is diffused and mixed by the diffuser plate to exit as a surface light source. In an edge-lit type backlight module, the light source is disposed on an edge of the backlight module, and the light from the light source is transmitted to a light guide plate (LGP). The LGP may atomize light from a line light source (e.g., a Cold Cathode Fluorescent Lamp (CCFL)) or a dot light source (e.g. a Light Emitting Diode (LED)), so as to function as a uniform surface light source, and the light exiting the LGP are diffused and deflected by the diffuser plate and finally the emission angle of the light is adjusted via a converging prism.

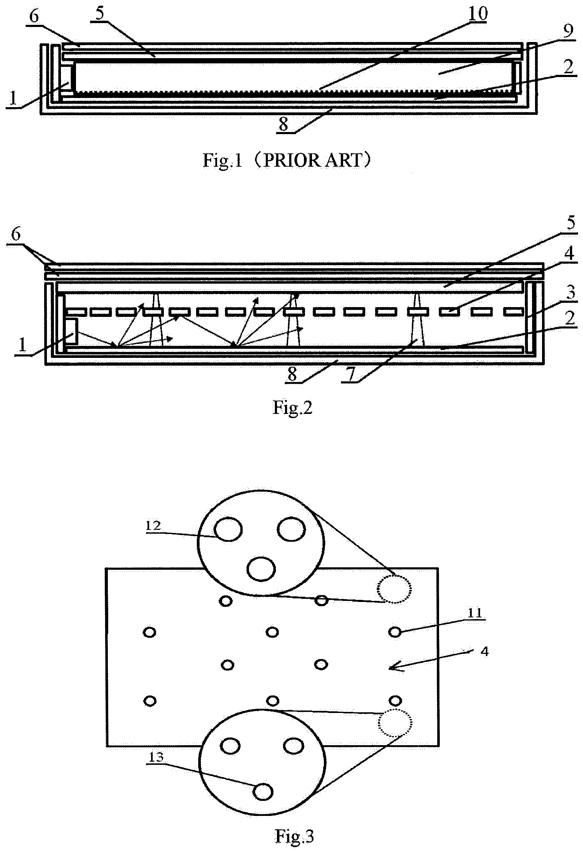

As illustrated in Fig. 1, a conventional edge-lit type backlight module comprises a luminant 1, a bottom reflector plate 2, a diffuser plate 5, an optical film plate 6, a frame 8 and a LGP 9. The LGP 9 made of a LGP material has six surfaces, which are an incident surface for receiving the light beam, a bottom surface connected with the incident surface, an exiting surface connected with the incident surface and opposed to the bottom surface, a side surface opposed to the incident surface and two remaining side surfaces opposite to each other. The luminant 1 is disposed at an edge of the frame 8, and the exiting surface of the luminant faces to the incident surface of the LGP 9. Methods for fixing the luminant 1 on the frame 8 include but are not limited to, bond, screw and other engagements. On the bottom surface of the LGP 9 there is an optical grid 10 made through print, lasering, injection molding and extrusion molding. The bottom reflector plate 2 has a function of diffuse reflection.

In a conventional edge-lit type backlight module, the light emitted by the luminant 1 is directly incident into the LGP 9. The LGP 9 is normally made of acrylic which has a larger refractive index relative to air. Therefore, the light suffers from several total internal reflections after incident into the LGP 9 and spreads in the whole interior of the LGP 9. When the light propagates to the optical grid 10, it undergoes diffuse reflection and exits the LGP 9 through the exiting surface. By adjusting the density of the optical grid 10, the brightness of the exiting light of the LGP 9 may be made uniform over the whole exiting surface.

However, in the above conventional edge-lit backlight module, due to the reason that acrylic generally has large weight and high price, the product cost is high. Moreover, special processes are required to form the optical grid 10 on the bottom surface of the LGP 9 and precise control of the distribution of the optical grid 10 is required, as a result, the processes are complicated and defective product may easily be produced. EP1 139 013A2 discloses that a backlight device suitable for illuminating a transmission-type display device, such as a liquid crystal device, is constituted by a reflection member for reflecting light, a transmission member disposed opposite to the reflection member so as to form a space from the reflection member, and a light source disposed to emit light into the space.

In addition, US2008/252819A1 discloses that a backlight module includes a reflection sheet and a film structure disposed above the reflection sheet with a gap therebetween. A light source is disposed in the gap between the reflection sheet and the film structure so as to provide light.

WO 2011/155537A1 discloses a planar light source device that can provide large-area, uniform, and high-quality planar illumination light. A planar light source device includes a main body case that surrounds the periphery of a gap between a pair of optical reflection plates disposed to face each other with side plates, and a plurality of point light sources arranged at predetermined intervals on at least one side plate of the main body case. The planar light source device allows light from the point light sources to be transmitted through at least one of the pair of optical reflection plates and emitted to the outside. At least one of the pair of optical reflection plates includes a light blocking region that blocks light from the point light sources on the point light sources side, and a light transmission region that does not allow the light from the point light sources to be directly transmitted but allows reflection light reflected between the optical reflection plates to be transmitted, and is aligned so that transmissivity increases as the distance from the light blocking region increases, and luminance is substantially uniform on the surface of the optical reflection plate.

### SUMMARY

In order to solve the problem of the LGP being heavy and pricy and the optical mesh being hard to fabricate, the present invention provides a surface light source and an edge-lit type backlight module.

A first aspect of the invention provides a surface light source device as defined in claim 1.

A second aspect of the invention provides an surface light source device as defined in claim 11.

A third aspect of the invention provides an edge-lit type backlight module as defined in claim 15.

### BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.
Fig. 1 schematically illustrates a configuration of a conventional edge-lit type backlight module;
Fig. 2 schematically illustrates a cross section of an edge-lit type backlight module in accordance with an embodiment of the invention;
Fig. 3 schematically illustrates a configuration of a light leaking plate in accordance with an embodiment of the invention;
Fig. 4 schematically illustrates a configuration of a stand in accordance with an embodiment of the invention;
Fig. 5 schematically illustrates a configuration of the edge-lit type backlight module of Fig. 2; and
Fig. 6 schematically illustrates a configuration of a part of the edge-lit type backlight module of Fig. 2.

### Description of numeral references:

1: luminant; 2: bottom reflector plate; 3: side reflector plate; 4: light leaking plate; 5: diffuser plate; 6: optical film plate; 7: stand; 8: frame; 9: light guide plate; 10: optical grid; 11: light leaking plate engage bore; 12: light leaking hole distal to the light source; 13: light leaking hole proximal to the light source; 14: light leaking plate engage portion; 15: ball-shaped extrusion.

### DETAILED DESCRIPTION

Unless otherwise defined, all the technical and scientific terms used herein have the same meanings as commonly understood by one of ordinary skill in the art to which the present invention belongs. The terms "first," "second," etc., which are used in the description and the claims of the present application for invention, are not intended to indicate any sequence, amount or importance, but distinguish various components. Also, the terms such as "a," "an," etc., are not intended to limit the amount, but indicate the existence of at lease one. The terms "comprises," "comprising," "includes," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the position of the object which is described
is changed, the relative position relationship may be changed accordingly.

In the present invention, the term "light leaking plate" refers to a sheet having at least one hole punched therethrough, and the sheet is made of an opaque material and light may pass through the at least one hole therein. In the present invention, the light leaking plate plays the following roles: 1) reflecting the light from the luminant a plurality of times on its internal surface, so that the light can be propagated in the whole light guide box; 2) making the light from the luminant to pass through the hole on the light leaking plate and exit in an emission direction of a surface light source; 3) making the brightness of the illuminant surface of the surface light source more uniform by adjusting the number and density of the holes on the light leaking plate.

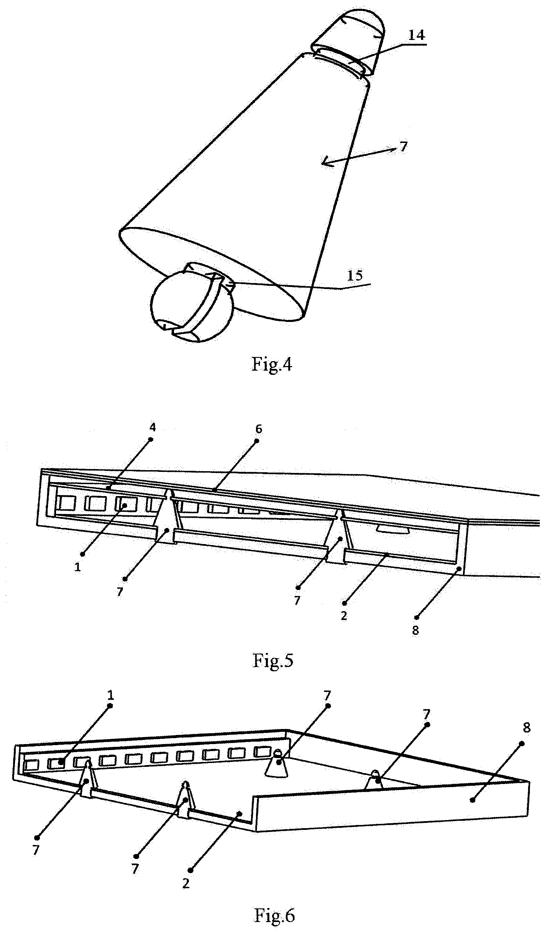

As illustrated in Fig. 2, an edge-lit type backlight module in accordance with a preferred embodiment of the invention comprises a surface light source device, which comprises: a luminant 1, a bottom reflector plate 2, a plurality of (e.g., four) side reflector plates 3 and a light leaking plate 4. As illustrated in Fig. 6, four side reflector plates 3 (of which only one is shown) together with a single bottom reflector plate 2 form a light guide box having an upper opening. Specifically, the four side reflector plates 3 forms peripheral sidewalls of the light guide box and the bottom reflector plate 2 is the bottom of the light guide box. The inner surfaces of the side reflector plates 3 and of the bottom reflector plate 2 are total internal reflection (TIR) surfaces. The luminant 1 is disposed on an inner surface of one of the side reflector plates 3. Based on the requirement, the luminant 1 may also be disposed on inner surfaces of two or more side reflector plates 3. Referring to Fig. 5, the light leaking plate 4 is disposed in the upper opening of the light guide box and is located above the bottom reflector plate 2. Preferably, as it can be seen from Fig. 2, the light leaking plate 4 is parallel with but separate from the bottom reflector 2. By this means, the bottom reflector plate 2, the side reflector plates 3 and the light leaking plate 4 form a substantially closed light guide box. The luminant 1 is for example a line light source such as a CCFL or a dot light source such as an LED.

The light leaking plate 4 is a thin sheet made of an opaque material having a reflective function and has a thickness of 0∼4mm, for example, the light leaking plate 4 is made of PET or PC with microbubbles. As described in the following, the light leaking plate 4 provides a plurality of light leaking holes 12 and 13, and the surface of the light leaking plate 4 facing to the bottom reflector 2 is a total reflective surface, which has a function of repeatedly using the unleaked light to the most extent. Another surface of the light leaking plate 4 at the side opposed to the bottom reflector plate 2 is a diffuse reflective surface and is used to make the exiting (i.e. leaking) light as uniform as possible, such that the light exiting the light leaking plate is rendered as a surface light. Due to the fact that all the inner surfaces of the light guide box are reflective, the light emitted by the luminant 1 is totally reflected a plurality of times and diffused to the whole light guide box and then exits the light leaking holes 12, 13 of the light leaking plate 4 as a surface light.

As shown in Fig. 3, provided on the light leaking plate is a plurality of light leaking holes 12, 13 which is arranged as an array of optical meshes, and the light in the light guide box may emit via the light leaking holes 12, 13. By designing the array of optical meshes, the uniformity of emission brightness on the light exiting surface of the light leaking plate 4 may be adjusted, thereby making the brightness of the whole light exiting surface uniform. Generally, the light leaking holes 12 distal to the light source (i.e., the light leaking holes far from the luminant 1) have a higher distribution density and a larger aperture, while the light leaking holes 13 proximal to the light source (i.e., the light leaking holes near the luminant 1) have a lower distribution density and a smaller aperture. In Fig. 3, the distribution of the optical meshes is described for example by the aperture size of the holes, where the aperture of the light leaking hole 12 distal to the light source is larger than that of the light leaking hole 13 proximal to the light source. The light leaking holes 12, 13 of the light leaking plate may be formed by using laser cutting/drill, or punch etc.

To fix the light leaking plate 4 in the upper opening of the light guide box, bonding and the like may be used to fix the light leaking plate 4 on the sidewalls of the light guide box. However, for better stability, it is preferably to use a mechanical structure to fix the light leaking plate 4 to the light guide box. For example, connecting members, such as an L-shaped connector, may be used to connect the upper or lower surface at peripheral edge of the light leaking plate 4 with the sidewalls of the light guide box. Alternatively, the light leaking plate 4 may be integrally formed with a plurality of protrusions for supporting. When fixing the light leaking plate 4 inside the light leaking box, the protrusions stand against the bottom reflector plate 2. As a further alternative, one or more stands 7 arranged on the bottom reflector plate 2 described in the following may also be used to fix the light leaking plate 4 inside the upper opening.

Preferably, the edge-lit type backlight module as shown in Fig. 2 further comprises a box-like frame 8 for accommodating the light guide box, where the size of the frame is adaptable to the size of the display panel. The frame has an opening, and a hollow interior or cavity, such that the bottom reflector plate 2, the side reflector plates 3 together with the luminant 1 may be fixed in the hollow interior or cavity (for example using adhesive tape or screw), and the light leaking plate 4 is disposed in the cavity and above the bottom reflector plate 2 using the stand 7.

In a variant embodiment, the luminant 1 may be disposed on an inner surface of at least one of the sidewalls of the frame 8 directly, using for example thermal-conductive adhesive tape or screw, the bottom reflector plate 2 may be disposed on the inner side of the bottom of the frame 8 using for example bonding, and the side reflector plates 3 may be disposed on the remaining sidewalls other than the one having the luminant of the frame 8 using for example bonding.

As described above, one or more stands 7 may be disposed on the bottom reflector plate 2, such that the light leaking plate 4 is fixed in the light guide box or its opening. Of course, many other approaches may be used to implement such fixation. One of the approaches is referred to as 'shape engagement', which is realized by the inherent shape of the stands 7. Specifically, as shown in Figs. 2 and 5, the stand 7 may be a smooth-surfaced cone having a narrower upper end and a wider lower end, the inherent 'tapering' feature of the cone may be used to hold the light leaking plate 4 stationary at an upper or middle position of the cone. Another approach may be referred to as 'mechanical engagement' as illustrated in Figs. 3 and 4, in which the light leaking plate 4 is formed with at least one light leaking plate engage bore 11, when one of the stands 7 goes through the at least one light leaking plate engage bore 11, the stand 7 can be fixed to the plate 4 by engaging with the bore, such that the light leaking plate 4 is fixed in the upper opening. Specifically, as shown in Fig. 4, the stand 7 is generally a cone made of a transparent material. A light leaking plate engage portion 14 is provided on the upper portion of the stand, while a light leaking plate engage bore 11 is disposed on the light leaking plate, such that the stand 7 can be fixed to the light leaking plate 4 by engaging the engage portion 14 into the engage bore 11. As a result, the distance between the light leaking plate 4 and the bottom reflector 2 is kept and a stable light guide box is formed. In another example, the stand is columnar or other shapes having support function.

The stand 7 may be fixed to the bottom reflector plate 2 in many ways. For example, as shown in Fig. 2, the stand 7 may stand against the bottom reflector 2. However, for a stable connection, the stand 7 may be bonded to the bottom reflector 2 or connected to the bottom reflector 2 by using other mechanical means, such as an engage bore, a groove or a connector. In an exemplary example as shown in Fig. 4, a ball-shaped extrusion 15 is provided at the lower end of the stand 7 and protrudes from the bottom of the stand 7. At the location that corresponds to the extrusion 15, the frame 8 and the bottom reflector 2 are provided with a frame bore and a bottom reflector bore respectively, such that both the frame bore and the bottom reflector bore may engage with the ball-shaped extrusion 15. It can be appreciated that the ball-shaped extrusion is exemplary only and other extrusions with other shapes, such as column, may be used. Accordingly, the frame bore and bottom reflector bore have cooperative shapes. Moreover, a slit is preferably disposed on a center portion of the ball-shaped extrusion 15, which may facilitate the fitting of the ball-shaped extrusion 15 into the bore, thereby enabling fixation.

Disposed above the light-exiting surface (i.e. the light leaking plate) of the surface light source device are a diffuser plate 5 and an optical film plate 6. The diffuser plate 5 is used for further diffusing the light exited from the light guide box such that the light is further homogenized in distribution. The optical film plate 6 is for changing the light shape. The term 'light shape' used herein refers to the intensity distribution of the light in different directions. The optical film plate 6 may include a prism film, a diffusion film, DBEF, a protection film, micro lens and other film. In Fig. 2, the diffuser plate 5 is also supported by the stand 7 and is separated from the light leaking plate with a light-mixing distance therebetween. The optical film plate 6 is disposed above the diffuser plate and is preferably supported by the sidewalls of the frame. In a preferred embodiment, the upper portion of the stand 7 passing through the light leaking plate engage bore 11 supports the diffuser plate 5.

More preferably, the top portion of the stand 7 has a hemispherical shape, thus the contact area between the stand 7 and the diffuser plate 5 is minimized to keep dark spots on the surface light source to the minimum and avoid the abrasion between the stand 7 and the diffusion 5.

The light-mixing distance between the light leaking plate 4 and the diffuser plate 5 is used to mask the optical meshes on the light leaking plate. The light-mixing distance is determined by the distance between the light leaking plate engage bore 11 of the light leaking plate 4 and the top end of the stand 7. Ideally, to make the finally manufactured backlight module as thin as possible, it is desirable that the light-mixing distance is zero. However, in real production it is difficult to realize zero in distance, the light-mixing distance is therefore about 0 to 20mm.

It may be appreciated by those skilled in the art that the embodiments described above are only the preferable embodiments of the invention. In other embodiments of the invention, the surface of the sidewall of the frame which is provided with the luminant 1 may have or may not have a side reflector plate 3 disposed thereon. When both the luminant 1 and the side reflector plate 3 are disposed on one and same surface of the sidewall, the side reflector plate 3 are positioned between the luminant 1 and the surface, and the light impinged on this surface of the sidewall can be totally reflected. The light leaking holes on the light leaking plate 4 may have identical apertures, just that the density of the light leaking holes (i.e., the number of light leaking holes per unit area) proximal to the luminant 1 is lower while that of the light leaking holes far from the luminant 1 is higher. The shape of the stand is not necessarily a cone, and the support for both the light leaking plate 4 and the diffuser plate 5 is not necessary to achieve by merely using the same support member such as stands 7. Practically, two separate support members of any shape that formed on the frame 8 and light leaking plate 4 respectively may be used to support the light leaking plate 4 and the diffuser plate 5. Therefore, the shape and position of the components as described in the above embodiment are not limitative to the individual component of the invention.

It is demonstrated by the simulation test of the backlight module according to the above embodiments that the backlight module according to the embodiments of the invention may realize higher picture uniformity (a uniformity of 60% or higher by adjusting the optical meshes) and higher light usage (about 42% as opposed to 53% of a convention configuration, and may be further improved by optical mesh adjustment and surface improvement). Although the optical path in the light guide box is substantially the same as the optical path of the LGP in the conventional configuration, the propagation path of the light is mostly in the air, therefore, the absorption of the light by the acrylic is avoided. As a result, the light energy usage is generally comparable or better than that of the conventional LGP configuration.

The backlight module of the invention may be used in a display device, such as LCD panels, e-paper, OLED panels, LCD TVs, LCD, digital photoframes, mobile phones, tablet computer and any other product or component having a display function.

In the embodiments of the solutions of the invention, the light mixing of the edge-lit light source is realized through the design of the reflector plate and the light leaking pate, thereby omitting the design of LGP in the backlight module. In comparison with the conventional direct-lit type backlight module, the backlight module according to the embodiments of the invention significantly reduces thickness of the product by using edge-lit type and reduces the number of luminants, thereby reducing the power consumption and cost. Furthermore, in contrast with the convention edge-lit type backlight module, the backlight module of the invention can realize uniform exiting light simply without the LGP. With the omission of the LGP, the weight and cost of the backlight module are further reduced. Meanwhile, since the light propagates in the air, the absorption of the light by the LGP is avoided, thereby improving the usage of the light. Moreover, the manufacture of the light leaking plate and the optical meshes is simple which simplifies the manufacture processes.

## Claims

1. A surface light source device, comprising: a luminant (1), a bottom reflector plate (2), a light leaking plate (4) and a plurality of side reflector plates (3), wherein the bottom reflector plate (2) and the plurality of side reflector plates (3) form a light guide box with an upper opening, the luminant (1) is disposed on at least one of the plurality of side reflector plates (3), the light leaking plate (4) is disposed in the upper opening of the light guide box, such that light from the luminant (1) is transformed into an exiting surface light via the light leaking plate (4),
wherein the light leaking plate (4) is disposed above the bottom reflector plate (2), the surface of the light leaking plate (4) that is opposite to the bottom reflector plate (2) and facing to the bottom reflector plate (2) is a total reflection surface, and the back surface of the light leaking plate (4) is a diffuse reflection surface.

2. The surface light source device according to claim 1, wherein the plurality of side reflector plates (3) function as peripheral sidewalls of the light guide box and the bottom reflector plate (2) functions as a bottom of the light guide box.

3. The surface light source device according to any of claims 1 to 2, wherein the light leaking plate (4) is parallel with the bottom reflector plate (2), but separate from the bottom reflector plate (2).

4. The surface light source device according to any of claims 1 to 3, wherein the light leaking plate (4) is made of an opaque material and has a plurality of light leaking holes (12,13), such that light from the luminant (1) exits via the plurality of light leaking holes (12,13).

5. The surface light source device according to claim 4, wherein the plurality of light leaking holes (12,13) is arranged in an array, and a distribution density or an aperture of the light leaking holes (12,13) increases with increasing distance between the luminant (1) and the light leaking holes (12,13).

6. The surface light source device according to any of claims 1 to 5, further comprising at least one stand (7) disposed in the light guide box, and the light leaking plate (4) is fixed in the upper opening by the at least one stand.

7. The surface light source device according to claim 6, wherein the light leaking plate (4) has at least one light leaking plate engage bore (11), the at least one stand (7) goes through and is engaged with the at least one light leaking plate engage bore (11).

8. The surface light source device according to claim 6 or 7, wherein the stand (7) is a cone or column.

9. The surface light source device according to any of claims 1 to 8, further comprising a box-like frame (8) for accommodating the light guide box, wherein the box-like frame (8) has an opening and a cavity, both the light guide box and the luminant (1) are disposed in the cavity and the light leaking plate (4) is disposed in the opening.

10. The surface light source device according to claim 9, wherein the bottom reflector plate (2) is fixed to the inner side of the bottom of the box-like frame (8) and a lower part of the stand (7) is fixed to the bottom reflector plate (2).

11. An surface light source device, comprising: a luminant (1), a bottom reflector plate (2), a light leaking plate (4), a plurality of side reflector plates (3), and a box-like frame (8), wherein the box-like frame (8) has an opening, and a cavity surrounded by a plurality of sidewalls,; the light leaking plate (4) is disposed in the opening of the box-like frame (8), such that light from the luminant (1) is transformed into an exiting surface light via the light leaking plate (4), wherein the luminant (1) is disposed on at least one of the plurality of sidewalls, and the plurality of side reflector plates (3) are disposed on the remaining sidewalls of the plurality of sidewalls, wherein the light leaking plate (4) is disposed above the bottom reflector plate (2), the surface of the light leaking plate (4) that is opposite to the bottom reflector plate (2) and facing to the bottom reflector plate (2) is a total reflection surface, and the back surface of the light leaking plate (4) is a diffuse reflection surface.

12. The surface light source device according to claim 11, wherein the light leaking plate (4) is made of an opaque material and has a plurality of light leaking holes (12,13), such that light from the luminant (1) exits via the plurality of light leaking holes (12,13).

13. The surface light source device according to any of claims 11 to 12, further comprising at least one stand (7) disposed in the cavity, and the light leaking plate (4) is fixed in the opening by the at least one stand.

14. The surface light source device according to claim 13, wherein the light leaking plate (4) has at least one light leaking plate engage bore (11), the at least one stand (7) goes through and is engaged with the at least one light leaking plate engage bore (11).

15. An edge-lit type backlight module comprising: the surface light source device according to any of claims 6 to 8 and 13-14, a diffuser plate (5), and optical film plates (6), wherein a surface light from the surface light source device exits through the diffuser plate (5) and the optical film plates (6).

16. The edge-lit type backlight module according to claim 15, wherein a light-mixing distance between the diffuser plate (5) and the light leaking plate (4) is 0 to 20mm.

17. The edge-lit type backlight module according to claim 15 or 16, wherein the diffuser plate (5) is supported by a top part of the stand.

18. The edge-lit type backlight module according to claim 17, wherein the top part (15) of the stand (7) is in hemispherical shape.

## Patentansprüche

1. Oberflächenlichtquellenvorrichtung, umfassend: ein Leuchtmittel (1), eine Bodenreflektorplatte (2), eine Lichtdurchlassplatte (4) und eine Mehrzahl von Seitenreflektorplatten (3), wobei die Bodenreflektorplatte (2) und die Mehrzahl der Seitenreflektorplatten (3) einen Lichtleitkasten mit einer oberen Öffnung bilden, wobei das Leuchtmittel an zumindest einer aus der Mehrzahl von Seitenreflektorplatten (3) angeordnet ist, wobei die Lichtdurchlassplatte (4) in der oberen Öffnung des Lichtleitkastens angeordnet ist, so dass Licht von dem Leuchtmittel (1) mittels der Lichtdurchlassplatte (4) in ein austretendes Oberflächenlicht umgewandelt wird,
wobei die Lichtdurchlassplatte (4) über der Bodenreflektorplatte (2) angeordnet ist, wobei die Oberfläche der Lichtdurchlassplatte (4), die gegenüber der Bodenreflektorplatte (2) ist und der Bodenreflektorplatte zugewandt ist, eine Totalreflexions-Oberfläche ist, und wobei die hintere Oberfläche der Lichtdurchlassplatte (4) eine diffuse-Reflexion-Oberfläche ist.

2. Oberflächenlichtquellenvorrichtung gemäß Anspruch 1, wobei die Mehrzahl der Seitenreflektorplatten (3) als periphere Seitenwände des Lichtleitkastens fungieren und die Bodenreflektorplatte (2) als ein Boden des Lichtleitkastens fungiert.

3. Oberflächenlichtquellenvorrichtung gemäß einem der Ansprüche 1 bis 2, wobei die Lichtdurchlassplatte (4) parallel zu der Bodenreflektorplatte (2) ist, aber getrennt von der Bodenreflektorplatte (2).

4. Oberflächenlichtquellenvorrichtung gemäß einem der Ansprüche 1 bis 3, wobei die Lichtdurchlassplatte (4) aus einem opaken Material hergestellt ist und eine Mehrzahl von Lichtdurchlassöffnungen (12,13) aufweist, so dass Licht von dem Leuchtmittel (1) durch die Mehrzahl von Lichtdurchlassöffnungen (12,1 3) austritt.

5. Oberflächenlichtquellenvorrichtung gemäß Anspruch 4, wobei die Mehrzahl der Lichtdurchlassöffnungen (12,13) in einer Anordnung angeordnet ist und eine Verteilungsdichte oder eine Apertur der Lichtdurchlassöffnungen (12,13) mit zunehmendem Abstand zwischen dem Leuchtmittel (1) und den Lichtdurchlassöffnungen (12,13) zunimmt.

6. Oberflächenlichtquellenvorrichtung gemäß einem der Ansprüche 1 bis 5, außerdem umfassend zumindest einen in dem Lichtleitkasten angeordneten Ständer (7), wobei die Lichtdurchlassplatte (4) in der oberen Öffnung mittels des zumindest einen Ständers fixiert ist.

7. Oberflächenlichtquellenvorrichtung gemäß Anspruch 6, wobei die Lichtdurchlassplatte (4) zumindest eine Lichtdurchlassplatten-Eingriffsbohrung (11) aufweist, wobei der zumindest eine Ständer (7) durch geht und im Eingriff ist mit der zumindest einen Lichtdurchlassplatten-Eingriffsbohrung (11).

8. Oberflächenlichtquellenvorrichtung gemäß Anspruch 6 oder 7, wobei der Ständer (7) ein Konus oder eine Säule ist.

9. Oberflächenlichtquellenvorrichtung gemäß einem der Ansprüche 1 bis 8, außerdem umfassend einen kastenartigen Rahmen (8) zur Aufnahme des Lichtleitkastens, wobei der kastenartige Rahmen (8) eine Öffnung und einen Hohlraum aufweist, wobei sowohl der Lichtleitkasten und das Leuchtmittel (1) in dem Hohlraum angeordnet sind und die Lichtdurchlassplatte (4) in der Öffnung angeordnet ist.

10. Oberflächenlichtquellenvorrichtung gemäß Anspruch 9, wobei die Bodenreflektorplatte (2) an der Innenseite des Bodens des kastenartigen Rahmens (8) fixiert ist und ein unterer Teil des Ständers (7) an der Bodenreflektorplatte (2) fixiert ist.

11. Oberflächenlichtquellenvorrichtung, umfassend: ein Leuchtmittel (1), eine Bodenreflektorplatte (2), eine Lichtdurchlassplatte (4), eine Mehrzahl von Seitenreflektorplatten (3) und einen kastenartigen Rahmen (8), wobei der kastenartige Rahmen (8) eine Öffnung aufweist und einen mittels einer Mehrzahl von Seitenwänden umgebenen Hohlraum; wobei die Lichtdurchlassplatte (4) in der Öffnung des kastenartigen Rahmens (8) angeordnet ist, so dass Licht von dem Leuchtmittel (1) mittels der Lichtdurchlassplatte (4) in ein austretendes Oberflächenlicht umgewandelt wird,
wobei das Leuchtmittel (1) an zumindest einer aus der Mehrzahl von Seitenwänden angeordnet ist, und wobei die Mehrzahl von Seitenreflektorplatten (3) an den verbleibenden Seitenwänden der Mehrzahl von Seitenwänden angeordnet ist, wobei die Lichtdurchlassplatte (4) über der Bodenreflektorplatte (2) angeordnet ist, wobei die Oberfläche der Lichtdurchlassplatte (4), die gegenüber der Bodenreflektorplatte (2) ist und der Bodenreflektorplatte (2) zugewandt ist, eine Totalreflexions-Oberfläche ist, und wobei die hintere Oberfläche der Lichtdurchlassplatte (4) eine diffuse-Reflexion-Oberfläche ist.

12. Oberflächenlichtquellenvorrichtung gemäß Anspruch 11, wobei die Lichtdurchlassplatte (4) aus einem opaken Material hergestellt ist und eine Mehrzahl von Lichtdurchlassöffnungen (12,13) aufweist, so dass Licht von dem Leuchtmittel (1) durch die Mehrzahl von Lichtdurchlassöffnungen (12,13) austritt.

13. Oberflächenlichtquellenvorrichtung gemäß einem der Ansprüche 11 bis 12, außerdem umfassend zumindest einen Ständer (7), angeordnet in dem Hohlraum, wobei die Lichtdurchlassplatte (4) in der Öffnung mittels des zumindest einen Ständers fixiert ist.

14. Oberflächenlichtquellenvorrichtung gemäß Anspruch 13, wobei die Lichtdurchlassplatte (4) zumindest eine Lichtdurchlassplatten-Eingriffsbohrung (11) aufweist, wobei der zumindest eine Ständer (7) durch geht und im Eingriff mit der zumindest einen Lichtdurchlassplatten-Eingriffsbohrung (11) ist.

15. Randlichttyphintergrundbeleuchtungsmodul, umfassend: die Oberflächenlichtquellenvorrichtung gemäße einem der Ansprüche 6 bis 8 und 13-14, eine Diffusorplatte (5) und optische-Film-Platten (6), wobei ein Oberflächenlicht von der Oberflächenlichtquellenvorrichtung durch die Diffusorplatte (5) und die optischen-Film-Platten (6) austritt.

16. Randlichttyphintergrundbeleuchtungsmodul gemäß Anspruch 15, wobei ein Lichtmischabstand zwischen der Diffusorplatte (5) und der Lichtdurchlassplatte (4) 0 bis 20 mm beträgt.

17. Randlichttyphintergrundbeleuchtungsmodul gemäß Anspruch 15 oder 16, wobei die Diffusorplatte (5) mittels eines oberen Teils des Ständers abgestützt ist.

18. Randlichttyphintergrundbeleuchtungsmodul gemäß Anspruch 17, wobei der obere Teil (15) des Ständers (7) eine halbkugelförmige Gestalt hat.

## Revendications

1. Un dispositif de source lumineuse surfacique, comprenant : un moyen lumineux (1), une plaque réflectrice inférieure (2), une plaque à fuite de lumière (4) et une pluralité de plaques réflectrices latérales (3), dans lequel la plaque réflectrice inférieure (2) et la pluralité de plaques réflectrices latérales (3) forment une boîte de guidage de la lumière avec une ouverture supérieure, le moyen lumineux (1) est disposé sur au moins l'une de la pluralité de plaques réflectrices latérales (3), la plaque à fuite de lumière (4) est disposée dans l'ouverture supérieure de la boîte de guidage de la lumière de manière que la lumière du moyen lumineux (1) soit transformée en une lumière surfacique sortante via la plaque à fuite de lumière (4),
dans lequel la plaque à fuite de lumière (4) est disposée au-dessus de la plaque réflectrice inférieure (2), la surface de la plaque à fuite de lumière (4) qui est opposée à la plaque réflectrice inférieure (2) et qui fait face à la plaque réflectrice inférieure (2) est une surface de réflexion totale, et la surface arrière de la plaque à fuite de lumière (4) est une surface de réflexion diffuse.

2. Le dispositif de source lumineuse surfacique selon la revendication 1, dans lequel la pluralité de plaques réflectrices latérales (3) fonctionnent comme des parois latérales périphériques de la boîte de guidage de la lumière et la plaque réflectrice inférieure (2) fonctionne comme un fond de la boîte de guidage de la lumière.

3. Le dispositif de source lumineuse surfacique selon l'une quelconque des revendications 1 à 2, dans lequel la plaque à fuite de lumière (4) est parallèle à la plaque réflectrice inférieure (2), mais séparée de la plaque réflectrice inférieure (2).

4. Le dispositif de source lumineuse surfacique selon l'une quelconque des revendications 1 à 3, dans lequel la plaque à fuite de lumière (4) est faite d'un matériau opaque et a une pluralité de trous de fuite de lumière (12, 13) de manière que la lumière provenant du moyen lumineux (1) sorte par la pluralité de trous de fuite de lumière (12, 13) .

5. Le dispositif de source lumineuse surfacique selon la revendication 4, dans lequel la pluralité de trous de fuite de lumière (12, 13) est agencée en un réseau, et une densité de distribution ou une ouverture des trous de fuite de lumière (12, 13) augmente avec la distance croissante entre le moyen lumineux (1) et les trous de fuite de lumière (12, 13).

6. Le dispositif de source lumineuse surfacique selon l'une quelconque des revendications 1 à 5, comprenant en outre au moins un support (7) disposé dans la boîte de guidage de la lumière, et la plaque à fuite de lumière (4) est fixée dans l'ouverture supérieure par l'au moins un support.

7. Le dispositif de source lumineuse surfacique selon la revendication 6, dans lequel la plaque à fuite de lumière (4) présente au moins un trou (11) d'engagement de la plaque à fuite de lumière, l'au moins un support (7) traverse et est engagé avec l'au moins un trou d'engagement de la plaque à fuite de lumière (11).

8. Le dispositif de source lumineuse surfacique selon la revendication 6 ou 7, dans lequel le support (7) est un cône ou une colonne.

9. Le dispositif de source lumineuse surfacique selon l'une quelconque des revendications 1 à 8, comprenant en outre un cadre en forme de boîte (8) pour recevoir la boîte de guidage de la lumière, dans lequel le cadre en forme de boîte (8) a une ouverture et une cavité, à la fois la boîte de guidage de la lumière et le moyen lumineux (1) sont disposés dans la cavité et la plaque à fuite de lumière (4) est disposée dans l'ouverture.

10. Le dispositif de source lumineuse surfacique selon la revendication 9, dans lequel la plaque réflectrice inférieure (2) est fixée sur le côté intérieur du fond du cadre en forme de boîte (8) et une partie inférieure du support (7) est fixée sur la plaque réflectrice inférieure (2).

11. Un dispositif de source lumineuse surfacique, comprenant : un moyen lumineux (1), une plaque réflectrice inférieure (2), une plaque à fuite de lumière (4), une pluralité de plaques réflectrices latérales (3) et un cadre en forme de boîte (8), dans lequel le cadre en forme de boîte (8) a une ouverture et une cavité entourée par une pluralité de parois latérales, la plaque à fuite de lumière (4) est disposée dans l'ouverture du cadre en forme de boîte (8) de manière que la lumière provenant du moyen lumineux (1) soit transformée en une lumière surfacique sortante via la plaque à fuite de lumière (4),
dans lequel le moyen lumineux (1) est disposé sur au moins l'une de la pluralité de parois latérales, et la pluralité de plaques réflectrices latérales (3) sont disposées sur les autres parois latérales de la pluralité de parois latérales, dans lequel la plaque à fuite de lumière (4) est disposée au-dessus de la plaque réflectrice inférieure (2), la surface de la plaque à fuite de lumière (4) qui est opposée à la plaque réflectrice inférieure (2) et qui fait face à la plaque réflectrice inférieure (2) est une surface de réflexion totale, et la surface arrière de la plaque à fuite de lumière (4) est une surface de réflexion diffuse.

12. Le dispositif de source lumineuse surfacique selon la revendication 11, dans lequel la plaque à fuite de lumière (4) est faite d'un matériau opaque et a une pluralité de trous de fuite de lumière (12, 13) de manière que la lumière provenant du moyen lumineux (1) sorte par la pluralité de trous de fuite de lumière (12, 13).

13. Le dispositif de source lumineuse surfacique selon l'une des revendications 11 à 12, comprenant en outre au moins un support (7) disposé dans la cavité, et la plaque à fuite de lumière (4) est fixée dans l'ouverture par l'au moins un support.

14. Le dispositif de source lumineuse surfacique selon la revendication 13, dans lequel la plaque à fuite de lumière (4) a au moins un trou d'engagement de la plaque à fuite de lumière (11), l'au moins un support (7) passe à travers et est engagé avec l'au moins un trou d'engagement de la plaque à fuite de lumière (11).

15. Un module de rétro-éclairage du type à éclairage par le bord, comprenant : le dispositif de source lumineuse surfacique selon l'une quelconque des revendications 6 à 8 et 13 à 14, une plaque de diffusion (5), et des plaques de film optique (6), dans lequel une lumière surfacique provenant du dispositif de source lumineuse surfacique sort à travers la plaque de diffusion (5) et les plaques de film optique (6).

16. Le module de rétro-éclairage du type à éclairage par le bord selon la revendication 15, dans lequel une distance de mélange de lumière entre la plaque de diffusion (5) et la plaque à fuite de lumière (4) est de 0 à 20 mm.

17. Le module de rétro-éclairage du type à éclairage par le bord selon la revendication 15 ou 16, dans lequel la plaque de diffusion (5) est supportée par une partie supérieure du support.

18. Le module de rétro-éclairage du type à éclairage par le bord selon la revendication 17, dans lequel la partie supérieure (15) du support (7) est de forme hémisphérique.
